# EUROPEAN PATENT SPECIFICATION

(11) **EP 1 625 956 B1**
(45) Date of publication and mention of the grant of the patent: **12.07.2017**
(21) Application number: 05445065.5
(22) Date of filing: 02.08.2005
(51) Int. Cl.: B60G 17/052, B60G 11/27, F16F 9/02, F16F 9/512

(54) **Gas spring, arrangement and method for a gas spring**
Gasfeder, Anordnung und Verfahren für eine Gasfeder
Ressort à gaz, agencement et procédé pour un ressort à gaz

(30) Priority: 11.08.2004 SE 0402004
(43) Date of publication of application: 15.02.2006
(73) Proprietor: ÖHLINS RACING AB, 194 27 Upplands Väsby (SE)
(72) Inventor: Sintorn, Torkel, 185 91 Vaxholm (SE)
(74) Representative: Awapatent AB

(56) References cited:
- WO-A-96/33905
- WO-A-02/095260
- DE-A1- 3 814 568
- DE-A1- 3 835 917
- DE-A1- 10 042 811
- GB-A- 668 543
- GB-A- 2 126 316
- GB-A- 2 220 725
- US-A- 2 984 475
- US-A- 5 337 864
- US-A1- 2004 004 316
- PATENT ABSTRACTS OF JAPAN vol. 012, no. 374 (M-749), 6 October 1988 (1988-10-06) -& JP 63 125837 A (ISUZU MOTORS LTD), 30 May 1988 (1988-05-30)
- PATENT ABSTRACTS OF JAPAN vol. 003, no. 076 (M-064), 29 June 1979 (1979-06-29) -& JP 54 052275 A (TOKICO LTD), 24 April 1979 (1979-04-24)
- PATENT ABSTRACTS OF JAPAN vol. 013, no. 376 (M-862), 21 August 1989 (1989-08-21) -& JP 01 131344 A (KAYABA IND CO LTD), 24 May 1989 (1989-05-24)
- PATENT ABSTRACTS OF JAPAN vol. 010, no. 070 (M-462), 19 March 1986 (1986-03-19) -& JP 60 213512 A (NISSAN JIDOSHA KK), 25 October 1985 (1985-10-25)

## Description

Gas spring, arrangement and method for a gas spring.

The present invention relates, among other things, to a gas spring intended for a vehicle and comprising a gas cylinder with a piston operating in the gas cylinder that divides the cylinder into two chambers by means of at least one divider arranged between the piston and the cylinder. The invention also relates to an arrangement with or in the form of a gas spring that comprises first and second gas chambers and one or more means for separating these, and a method for determining the spring characteristics of such a gas spring.

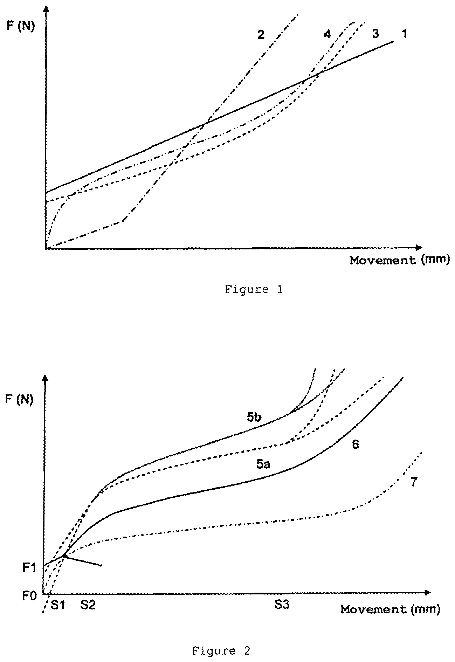

There are many ways of providing suspension for vehicles, for example using coil springs, pneumatics or hydraulics. The different suspension systems have both advantages and disadvantages, which will be described in greater detail below. A common suspension system with a linear coil spring with preloading has a build-up of forces similar to that represented by 1 in Figure 1 below. In this case, a large force is required before the spring starts to absorb forces, meaning that the gas spring will not operate in the event of small excitations. A known solution to this problem is to use either a plurality of series-connected springs with different spring constants or a progressive spring, whereby a curve figuration 2 in Figure 1 can be obtained. The connecting together of several coil springs results in a heavy construction that is difficult to adjust without disassembling the whole spring system. A progressive spring is also heavy and difficult to adjust and to optimize for different loads. Further relevant hydraulic force absorbing systems are disclosed in JPS60 155 025 A1 and DE 38 35 917A1. A pneumatic spring with a single chamber has a progressive curve, see Figure 1, curve 3, that starts at a particular preload and therefore has the same disadvantages as the single coil spring described above. The advantage of a single chamber spring is that the build-up of force is progressive, so that the spring can absorb much greater forces without bottoming. The build-up of force with a two-chamber spring is described by curve 4 in Figure 1 which shows the case when the build-up of force starts from almost zero and then increases progressively and then levels out and then, at the end of the movement, increases progressively again. On account of the ratio between the volumes of air that are compressed in the chambers, the spring constant is initially high in the event of small movements and therefore a large force is required in order to make the spring work.

A gas spring with only one gas chamber is known through, for example US 6 311 962 B1. The system in this patent comprises a damper unit in the form of a cylinder joined together with an external seal, which is telescopically mounted at one end in one end of a pneumatic cylinder, in a corresponding way to that described above. The difference in comparison to what is described above is that one end of the pneumatic cylinder is open and that only a space between the damping cylinder and the pneumatic cylinder is sealed. In this case, the space is sealed against the atmosphere and forms a compression chamber as a result of the external sealing of the damping cylinder.

The utilization of two-chamber pneumatic suspension systems in vehicles is also known, for example through US 6 135 434 A which shows a system that comprises a damping cylinder that has one end mounted telescopically in one end of a pneumatic cylinder in such a way that the damper works as a piston. The other ends of the respective cylinders are fixed between the parts of the vehicle that need shock-absorbing. In order to achieve springing, the pneumatic cylinder is divided into two chambers with variable volumes, which chambers are delimited by seals. These constitute an expansion chamber and a compression chamber. When the pneumatic cylinder is subjected to an external compressive force, the air in one chamber is compressed, resulting in the pressure increasing in the chamber. In order to equalize the pressure between the two chambers and in order to avoid both the chambers needing to be pressurized, a duct is arranged in the wall of the pneumatic cylinder. The duct is only open when the pneumatic spring is almost completely expanded.

As it is desirable to achieve a suspension system that operates in the event of small rapid excitations, but that can also absorb large forces and damp large springing movements effectively, a system is required that has a low spring constant and a low pre-load, even at the start of the movement. The ideal is thus a spring system that combines the advantages of a low spring constant at the start of the movement with a progressive increase in force at the end of the movement. See Figure 2.

In connection with gas springs and arrangements according to the invention, there is a desire to be able to adjust required characteristics of the gas spring function in accordance with the above. In the embodiment of the concept of the invention, there can be a desire to be able to select damping characteristics from among several different possible damping characteristics in order to be able to match the damping to the springing. The gas spring or the arrangement must, in certain cases, be able to be made as compact as possible, but still with technically simple and well-tried means and components. A small and compact spring with low weight is much sought after in vehicle design. There is also a desire to be able to utilize large gas volumes within or in association with the gas spring in spite of the said compactness, so that a large movement of the spring is possible.

With a gas spring of this kind, there is also a need to be able to distinguish the low and high frequency movements in the gas spring or the system which, for example, must be able to work in such a way that the gas spring deals with the movements in only one of the parts between which the gas spring function is arranged, for example the chassis. The gas spring must thus be able to be arranged in such a way that the movements of the other part are not affected; that is the gas spring or the system can work purely as a chassis control unit.

The object of the present invention is to solve all or parts of the problems described above.

The principal characteristics of a gas spring, an arrangement and a method according to the invention are apparent from the following principal claims and independent claims. Further developments of the concept of the invention according to these claims are apparent from the subsidiary claims associated with these claims.

Currently preferred embodiments of a gas spring, an arrangement and a method according to the invention will be described below with reference to the attached drawings in which:
Figure 1 shows, in the form of diagram, known force/movement curves,
Figure 2 shows, in the form of diagram, sought-after force/movement curves,
Figure 3 shows, in vertical section and in outline, a first embodiment of a gas spring, which is not according to the invention as claimed,
Figure 4 shows, in vertical section and in outline, a second embodiment of a gas spring, which is not according to the invention as claimed,
Figures 5-5b show, in vertical section and in outline, other embodiments of a gas spring,
Figure 6 shows, in vertical section, a constructive embodiment of the damper according to Figure 3,
Figure 6a shows, in enlarged vertical section, parts of the damper according to Figure 4, and
Figure 7 shows, in side view, a shock absorber with gas spring functionality attached in a vehicle that is shown in outline.

Figure 1 has been described above. In Figure 2, three sought-after spring curves have been drawn in. Using various solutions that are based on the same principle, a spring behaviour resembling the ideal curves can be achieved. Figure 2 is described here together with the remaining figures that show the different design solutions.

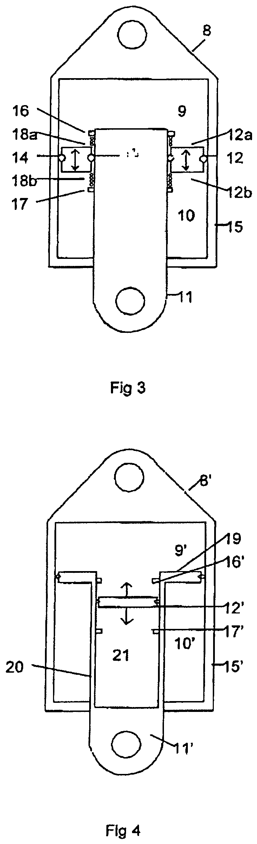

Figure 3 shows a simplified sketch of an embodiment of the concept of the invention. The gas spring 8 is divided into an expansion chamber 9 and a compression chamber 10 that are separated by a divider 12 arranged on a piston rod 11. The divider is sealed by internal and external seals 13, 14 against the inner surface of the cylinder 15 and the outer surface of the piston rod 11. What is specific to the invention is that the divider 12 is arranged on the piston rod 11 in such a way that it can be moved. By means of this construction, the spring constant at the start and at the end of the movement can be changed in accordance with a predetermined function and the gas spring's Force/movement curve can be described by Figure 2 curve 5a. The divider 12 can either float freely in the gas, or - in order, in addition, to be able to control the spring constant in the middle of the movement - the divider can be spring-suspended by one or more coil springs 18a and 18b. By selecting different spring constants and different preloading of this coil spring or these coil springs 18a, 18b, the gradient of the initial curve 5a and the force F at which the spring starts to be compressed are changed. The curve 5a describes Figure 3 when the piston floats freely and curve 5b shows the spring behaviour with only the upper spring 18a mounted. The spring has no preloading and starts to be compressed when the divider acts on the spring in the event of the movement S2. The maximum movements of the divider 12 are limited by mechanical stops 16, 17. Dependent upon where these mechanical stops 16, 17 are positioned, the force curve turns as can be seen in the curves 5a, 5b, before the movement S1 and after the movement S2 respectively. As the curve 5b describes the gas spring with the spring 18a mounted, the gradient of the curve between the movements S1 and S2 is changed depending upon the spring constant of the spring 18a. The curve 6 has a preloading of the spring which means that a force of size F1 is required in order to compress the spring; the larger the preloading, the higher the force that is required. Depending upon how much preloading the spring is given, the angle 6a in the initial part of the curve 6 is thus moved upwards or downwards on the force axis. The total spring constant and the force absorption at the start of the movement of the gas spring can thus be determined by preloading the spring that acts on the movable divider.

Figure 4 shows an alternative embodiment of the invention in which the movable divider 12' is placed inside the piston rod 11'. The expansion chamber 9' and the compression chamber 10' are delimited by a divider 19 attached to the piston rod 11' and sealed against the outer cylinder 15'. The movable divider 12' forms a chamber 21 in the piston rod 11', which chamber is connected to the compression chamber 10' by a duct 20. If the gas is able to flow freely between the chambers 21 and 10', then the gas spring behaves in the same way as the spring described in Figure 3. As the total volume in the spring is utilized in a different way in this alternative embodiment, the spring can, for example, be made smaller while retaining its spring characteristics. It is also possible to insert a valve or a regulator in the duct 20. By means of this device, the flow between the chambers 10' and 21 can be adjusted. That is to say, it is possible to use the valve as a "preloading" of the spring. Also in this design, the divider can float freely or else the movement can be determined by a coil spring. The movements of the divider are also limited by stops 16', 17'. When the duct 20 is completely open, the spring characteristics can be described by curve 7 in Figure 2. Due to the position of the floating divider, the ratio of the volumes with which the pressure in the gas cylinder affects the areas gives a curve form that is flatter than the curves 5 and 6.

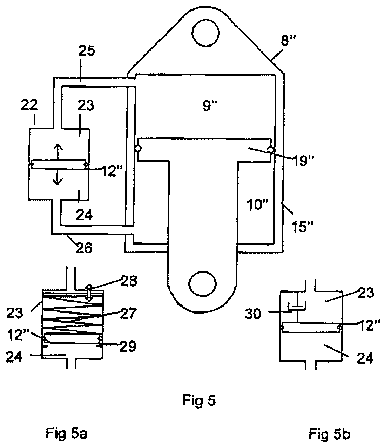

In Figure 5, the first and second chambers are indicated by 9" and 10" and the fixed divider that separates the chambers is designated 19'. The movable divider 12" is here placed in an external unit 22, where the divider 12" divides the inner space in the unit 22 into two chambers 23, 24. The chamber 23 is interconnected with the chamber 9" via a connecting pipe or duct 25 and the chamber 24 is interconnected with the chamber 10" via the pipe/duct 26. Regulators and/or valves can be inserted in the ducts 25, 26 that give a delay to the flow. As the divider floats freely or is spring-suspended in a separate unit in this embodiment, the gas spring can be made smaller and more compact.

Figure 5a shows the unit 22 with a spring 27 as the force-absorber. The preloading of the spring can be changed by means of an adjusting device 28. If required, a stop 29 can also be used to predetermine the size of the chambers 23, 24.

In Figure 5b, the movement of the floating divider 12" is limited by a damper unit 30. By introducing such a unit, the spring behaviour can be dependent upon speed, that is to say for rapid excitations of the gas spring the spring behaviour can be selected to be different to the spring behaviour for slow movements. In, for example, a motorcycle, the chassis moves with a frequency of approximately 1-2 Hz, while the wheels move with a frequency of around 10 Hz. On account of the different movement frequencies of the chassis and the wheels, it is therefore possible to separate the movements with the speed-dependent damper and thereby give the different movements separate spring behaviours.

A damper unit can, of course, also be combined with a spring that is inserted between the divider 12, 12' and the stops 16, 16', 17, 17' in one or both directions in the design solutions according to Figures 3 and 4.

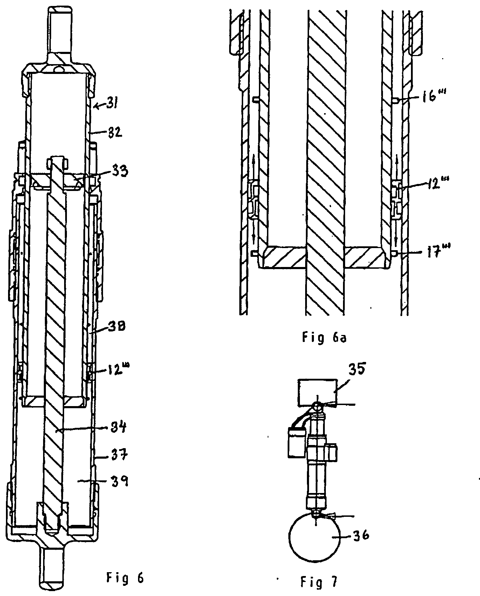

The gas spring function can be combined with other functions in a unit or in an arrangement, of which the shock-absorber function constitutes one embodiment. Such an embodiment of the invention is described in Figures 6 and 7. The gas spring unit according to Figure 7 is attached between two parts of the vehicle in question (that is a car, motorcycle, scooter, boat, aeroplane, etc,) with the parts in this figure corresponding to a chassis 35 and a wheel 36. The embodiment in Figure 6 is based on the solution according to Figure 3, but instead of having a solid piston rod, in this solution a damper unit 31 replaces the piston rod. The damper unit 31 comprises a damping cylinder 32, a damping piston 33 and a piston rod 34. The upper part of the damping cylinder 32 is attached to the chassis 35 and, at the other end of the gas spring, the piston rod 34 and the outer cylinder 37 are attached to the wheels 36. The floating divider 12'" is placed between the damping cylinder 32 and the outer cylinder 37, so that the space above the divider 12'" forms an expansion chamber 38 and the space below the divider 12'" forms a compression chamber 39. The movements of the floating divider 12'" are limited by upper and lower mechanical stops 16'", 17'". If a spring is placed between the stops and the divider, then this embodiment of the invention has a Force/movement curve that resembles curve 5b in Figure 2; without a spring, curve 5a is obtained.

In a method for determining the spring characteristics for a gas spring, this is carried out with a gas cylinder, with the spring characteristics being created only by a first device, by means of which the space in the gas cylinder is divided into a first gas chamber and a second gas chamber, or in combination with a second device which is arranged in an additional chamber, which is divided by the second device into a third chamber and a fourth chamber that are connected to the first chamber and the second chamber respectively. The first or second device is arranged as a separating device that brings about an increase in the volume of the first chamber or the third chamber and a reduction in the volume of the second chamber or the fourth chamber, or vice versa, in response to a pressure difference between the first chamber and the second chamber or the third chamber and the fourth chamber.

The separating device(s)/divider(s) can be provided with shimming.

The invention is not limited to the embodiments described above as examples, but can be modified within the framework of the following patent claims and concept of the invention.

The separating device (s) 12, 12', 12", 12'" are thus arranged to be able to be moved longitudinally relative to a piston 11 or other movable unit 31 arranged in the gas cylinder 15, 37, in response to pressure differences that have arisen in the first and second volumes created by the separating device, by the separating devices 12, 12', 12", 12'" being arranged to maintain a seal between the chambers during the respective relative movement.

## Claims

1. Arrangement with or in the form of a gas spring that comprises first (9") and second (10") gas chambers and one or more means for separating these, **characterized in that** the separating device(s) are arranged to increase the volume of the first chamber (9") and to reduce the volume of the second chamber (10"), or vice versa, when a difference in pressure arises in the chamber, wherein the gas spring comprises a gas cylinder (15") and a piston (19") inside this that can be provided with a piston rod, which piston divides the space inside the gas cylinder into the first and second chambers (9", 10"), and **in that** the first and second chambers are connected to third and fourth chambers (23, 24) respectively, which third and fourth chambers are achieved by means of a divider or a second piston (12") acting as a separating device that is arranged to be able to be moved longitudinally in an additional gas cylinder (22), and wherein said divider or second piston (12") is arranged to be longitudinally movable relative to said piston (19") in response to pressure differences that have arisen in the first and second chambers (9",10") created by said piston (19").

2. Arrangement according to Claim 1, **characterized in that** the divider or the second piston (12") is able to be moved in one or both longitudinal directions against a resistance, for example a spring device (27) or a damping device (30).

3. Arrangement according to claim 2, **characterized in that** in the case with a resistance in the form of a spring device (27), the arrangement or the spring device is arranged to be able to be preloaded by means of an adjusting device (28).

4. Arrangement according to any one of Claims 1-3, **characterized in that** it is arranged to respond to small and rapid movements and is able to absorb large forces and damp large spring movements, that is have a low spring constant at the start of the respective movement, with progressive or levelled-out increase in force at the end of the movement.

5. Arrangement according to Claim 4, **characterized in that** the gas spring is arranged to be able to work with a coil spring in an actual suspension, and **in that** the gas spring is arranged to absorb forces progressively or essentially horizontally linearly at the end of the coil spring's linear force-absorbing area, for the purpose, for example, of increasing the size of the movement.

6. Arrangement according to any one of the preceding claims, wherein the size of the third and fourth gas chambers (23, 24) is predetermined by means of a stop (29).

7. Arrangement according to anyone of the preceding claims, wherein the third chamber (23) is interconnected with the first chamber (9") via a first connecting pipe/duct (25) and the fourth chamber (24) is interconnected with the second chamber (10") via a second pipe/duct (26).

8. Arrangement according to Claim 7, wherein regulators and/or valves can be inserted in the ducts (25, 26) to give a delay to the flow.

9. Arrangement according to any one of the preceding claims, wherein, when a damper unit (30) is introduced in the additional gas chamber (22), the spring behavior is dependent upon speed, i.e. for rapid excitations of the gas spring the spring behavior can be selected to be different to the spring behavior for slow movements.

## Patentansprüche

1. Anordnung mit oder in der Form einer Gasfeder, die erste (9") und zweite (10") Gaskammern und ein oder mehrere Mittel umfasst, um diese zu trennen, **dadurch gekennzeichnet, dass** die Trennvorrichtung bzw. Trennvorrichtungen derart ausgeführt sind, dass sie das Volumen der ersten Kammer (9") vergrößern und das Volumen der zweiten Kammer (10") reduzieren oder umgekehrt, wenn ein Druckunterschied in der Kammer aufkommt, wobei die Gasfeder einen Gaszylinder (15") und einen Kolben (19") innerhalb darin, der mit einer Kolbenstange versehen sein kann, umfasst und der Kolben den Raum innerhalb des Gaszylinders in die ersten und zweiten Kammern (9", 10") teilt, und dass die ersten und zweiten Kammern entsprechend mit dritten und vierten Kammern (23, 24) verbunden sind, wobei die dritten und vierten Kammern mittels eines Teilers oder eines zweiten Kolbens (12") erreicht werden, der als eine Trennvorrichtung agiert, die derart ausgeführt ist, dass sie in Längsrichtung in einem zusätzlichen Gaszylinder (22) bewegt werden kann, und wobei der Teiler oder der zweite Kolben (12") derart ausgeführt ist, dass er als Reaktion auf Druckdifferenzen, die erzeugt durch den Kolben (19") in den ersten und zweiten Kammern (9", 10") aufgekommen sind, relativ zu dem Kolben (19") in Längsrichtung beweglich ist.

2. Anordnung nach Anspruch 1, **dadurch gekennzeichnet, dass** der Teiler oder der zweite Kolben (12") in eine oder beide Längsrichtungen gegen einen Widerstand, wie beispielsweise eine Federvorrichtung (27) oder eine Dämpfungsvorrichtung (30), bewegt werden kann.

3. Anordnung nach Anspruch 2, **dadurch gekennzeichnet, dass** im Fall mit einem Widerstand in der Form einer Federvorrichtung (27) die Anordnung oder die Federvorrichtung derart ausgeführt ist, dass sie mittels einer Justiervorrichtung (28) vorgespannt werden kann.

4. Anordnung nach einem der Ansprüche 1 bis 3, **dadurch gekennzeichnet, dass** sie derart ausgeführt ist, dass sie auf kleine und rasche Bewegungen anspricht und große Kräfte absorbieren und große Federbewegungen dämpfen kann, d. h., eine niedrige Federkonstante beim Beginn der entsprechenden Bewegung aufweist mit progressivem oder ausgeglichenem Anstieg in der Kraft am Ende der Bewegung.

5. Anordnung nach Anspruch 4, **dadurch gekennzeichnet, dass** die Gasfeder derart ausgeführt ist, dass sie mit einer Spiralfeder in einer tatsächlichen Federung arbeiten kann, und dass die Gasfeder ausgeführt ist, stufenweise oder im Wesentlichen horizontal linear am Ende der linear Kraft absorbierenden Fläche der Spiralfeder beispielsweise zum Zweck, die Größe der Bewegung zu erhöhen, Kräfte zu absorbieren.

6. Anordnung nach einem der vorstehenden Ansprüche, wobei die Größe der dritten und vierten Gaskammern (23, 24) mittels eines Anschlags (29) vorbestimmt ist.

7. Anordnung nach einem der vorstehenden Ansprüche, wobei die dritte Kammer (23) mit der ersten Kammer (9") über ein erstes verbindendes Rohr/einen ersten verbindenden Kanal (25) verbunden ist und die vierte Kammer (24) mit der zweiten Kammer (10") über ein zweites Rohr/einen zweiten Kanal (26) verbunden ist.

8. Anordnung nach Anspruch 7, wobei Regulatoren und/oder Ventile in die Kanäle (25, 26) eingesetzt sein können, um dem Strom eine Verzögerung zu geben.

9. Anordnung nach einem der vorstehenden Ansprüche, wobei, wenn eine Dämpfereinheit (30) in die zusätzliche Gaskammer (22) eingeführt wird, das Federverhalten von Geschwindigkeit abhängig ist, d. h., dass für rasche Anregungen der Gasfeder das Federverhalten derart ausgewählt werden kann, dass es sich von dem Federverhalten für langsame Bewegungen unterscheidet.

## Revendications

1. Agencement avec un ressort à gaz, ou sous la forme d'un ressort à gaz, comprenant des première (9") et deuxième (10") chambres de gaz et un ou plusieurs moyens pour séparer celles-ci,
**caractérisé en ce que** le(s) dispositif(s) de séparation est/sont étudié(s) pour augmenter le volume de la première chambre (9") et pour réduire le volume de la deuxième chambre (10"), ou vice versa, lorsqu'une différence de pression survient dans la chambre, dans lequel le ressort à gaz comprend un cylindre à gaz (15") et un piston (19") à l'intérieur de celui-ci, lequel peut être doté d'une tige de piston, lequel piston divise l'espace à l'intérieur du cylindre à gaz en les première et deuxième chambres (9", 10"), et **en ce que** les première et deuxième chambres sont reliées respectivement à des troisième et quatrième chambres (23, 24), lesquelles troisième et quatrième chambres sont obtenues au moyen d'un séparateur ou d'un deuxième piston (12") agissant en tant qu'un dispositif de séparation qui est étudié pour pouvoir se mouvoir longitudinalement dans un cylindre à gaz additionnel (22), et dans lequel ledit séparateur ou deuxième piston (12") est étudié pour être mobile longitudinalement par rapport audit piston (19") en réponse à des différences de pression qui sont apparues dans les première et deuxième chambres (9", 10") crées par ledit piston (19").

2. Agencement selon la revendication 1, **caractérisé en ce que** le séparateur ou deuxième piston (12") est capable de se mouvoir dans une, ou les deux directions longitudinales à l'encontre d'une résistance, par exemple un dispositif de ressort (27) ou un dispositif d'amortissement (30).

3. Agencement selon la revendication 2, **caractérisé en ce que**, dans le cas avec une résistance sous la forme d'un dispositif de ressort (27), l'agencement ou dispositif de ressort est étudié pour pouvoir être précontraint au moyen d'un dispositif d'ajustement (28).

4. Agencement selon l'une quelconque des revendications 1-3, **caractérisé en ce qu'**il est étudié pour répondre à des mouvements faibles et rapides et est capable d'absorber de grandes forces et d'amortir d'importants mouvements de ressort, c'est-à-dire d'avoir une faible constante de ressort au début du mouvement respectif, avec une augmentation progressive ou équilibrée de la force à la fin du mouvement.

5. Agencement selon la revendication 4, **caractérisé en ce que** le ressort à gaz est étudié pour pouvoir travailler avec un ressort hélicoïdal dans une suspension effective, et **en ce que** le ressort à gaz est étudié pour absorber des forces progressivement ou sensiblement de manière horizontalement linéaire à la fin de la zone d'absorption de force linéaire du ressort hélicoïdal dans le but d'augmenter par exemple l'ampleur du mouvement.

6. Agencement selon l'une quelconque des revendications précédentes, dans lequel la taille des troisième et quatrième chambres de gaz (23, 24) est prédéterminée au moyen d'un arrêt (29).

7. Agencement selon l'une quelconque des revendications précédentes, dans lequel la troisième chambre (23) est interconnectée avec la première chambre (9") via un premier tuyau/conduit de raccordement (25), et la quatrième chambre (24) étant interconnectée avec la deuxième chambre (10") via un deuxième tuyau/conduit de raccordement (26).

8. Agencement selon la revendication 7, dans lequel des régulateurs et/ou soupapes peuvent être insérés dans les conduits (25, 26) pour conférer un retard au flux.

9. Agencement selon l'une quelconque des revendications précédentes, dans lequel, lorsqu'une unité d'amortissement (30) est introduite dans la chambre de gaz additionnelle (22), le comportement du ressort dépend de la vitesse, à savoir que pour des excitations rapides du ressort à gaz, le comportement du ressort peut être sélectionné pour être dififérent du comportement de ressort pour des mouvements lents.
